Europäisches Patentamt

European Patent Office

Office européen des brevets

(19)

(11) Veröffentlichungsnummer: **0 246 358 B1**

(12) **EUROPÄISCHE PATENTSCHRIFT**

(45) Veröffentlichungstag der Patentschrift:
19.09.90

(51) Int. Cl.⁵: **C08L 71/12**, C08J 3/00

(21) Anmeldenummer: 86117124.7

(22) Anmeldetag: 09.12.86

(54) Verfahren zur Herstellung thermoplastischer, PPE enthaltender Formmassen.

(30) Priorität: 07.02.86 DE 3603798

(43) Veröffentlichungstag der Anmeldung:
25.11.87 Patentblatt 87/48

(45) Bekanntmachung des Hinweises auf die Patenterteilung:
19.09.90 Patentblatt 90/38

(84) Benannte Vertragsstaaten:
AT BE CH DE FR GB IT LI NL SE

(56) Entgegenhaltungen:
EP-A- 0 048 154
EP-A- 0 126 972
FR-A- 2 104 506

(73) Patentinhaber: HÜLS AKTIENGESELLSCHAFT, - RSP Patente / PB 15 - Postfach 13 20, D-4370 Marl 1(DE)

(72) Erfinder: Ribbing, Wilfried, Dr., Heesternweg 20, D-4270 Dorsten 12(DE)
Erfinder: Jadamus, Hans, Dr., Hervester Strasse 8, D-4370 Marl(DE)
Erfinder: von Portatius, Hans-Eberhard, Dr., Am Gecksbach 40, D-4270 Dorsten 11(DE)

ACTORUM AG

**Beschreibung**

Gegenstand der vorliegenden Erfindung ist ein Verfahren zur Herstellung Polyphenylenether (= PPE) enthaltender thermoplastischer Massen mit besonders niedrigen Gehalten an flüchtigen Anteilen.

Es ist bekannt, daß man thermoplastische Massen durch Mischen in Knetern herstellen kann, indem man die Komponenten in fester Form zusammen oder getrennt in den gewünschten Mischungsverhältnissen eindosiert und während oder nach dem Aufschmelzen in den vorgesehenen Mischungszonen vermischt. Dabei werden die Polymeren zwangsweise einer hohen mechanischen und thermischen Belastung unterworfen. Ein solches Verfahren führt bei thermischen Massen wie den PPE-haltigen Formmassen, bei denen thermisch und mechanisch besonders empfindliche Polymere eingemischt werden, zu unbefriedigenden Ergebnissen.

Um diese Nachteile zu vermeiden, wird beispielsweise in der US-PS 3 383 435 vorgeschlagen, die Vermischung des PPE und des Polystyrols bei einem niedrigen Temperaturniveau, insbesondere bei Temperaturen zwischen 232 und 254 °C, durchzuführen. Unter diesen Bedingungen ist jedoch keine innige Vermischung beider Komponenten möglich. Daher wird auch nach einem zweiten Strangpressen lediglich eine "innigere Dispersion", nicht jedoch eine homogene Mischung erzielt. Erhöht man die Temperatur auf etwa 300 °C, so daß der Mischeffekt verbessert wird, so ist eine Schädigung von thermoempfindlichen Polymeren unvermeidlich.

Das Ziel anderer Verfahren ist es, die thermische und physikalische Belastung dadurch zu verringern, daß der Mischungsvorgang in Lösung oder auch in Gegenwart viskositätsvermindernder Zusatzstoffe durchgeführt wird und die gemischten Massen anschließend von dem Restgehalt dieser Mittel befreit werden. So ist es bekannt, Lösungen, die PPE und ein vinylaromatisches Harz enthalten, herzustellen und diese, gegebenenfalls nach einer vorgeschalteten Aufkonzentrierung, durch einen Entgasungsextruder zu extrudieren (siehe CA-PS 1 063 761). Die Anmeldung enthält keinerlei Angaben über den erreichten Entgasungsgrad und über die Qualität der erhaltenen thermoplastischen Massen. Unser Beispiel A zeigt, daß eine solche Vorgehensweise nachteilig ist.

Zwei weitere Schutzrechte beinhalten Ausgestaltungen dieses Verfahrens. Nach der DE-OS 31 31 440 wird eine 15 bis 60 %ige PPE-Lösung mit einem anderen Polymeren vereinigt und die gemeinsame Lösung in einem mehrstufigen Verdampfungsprozeß vom Lösemittel befreit. Das Verfahren der DE-OS 33 15 803 sieht die Aufkonzentrierung einer 5 bis 50 %igen PPE-Lösung, die Vereinigung mit der Schmelze eines anderen Polymeren bei Schergeschwindigkeiten von 5 bis 400 sek$^{-1}$ und die anschließende oder gleichzeitige Aufkonzentrierung durch Verdampfung vor. Bei beiden Verfahren wird das thermoempfindliche Polymer im Aufkonzentrierungsschritt einer erheblichen thermischen Belastung unterworfen, da bekannt ist, daß sich letzte Reste eines Lösemittels aus einem Polymer besonders schwer entfernen lassen. Je niedriger der geforderte Restgehalt an flüchtigen Bestandteilen im Polymeren sein soll, desto höher muß die Temperatur und damit auch die mechanische Belastung des Polymeren sein. Arbeitet man umgekehrt bei relativ niedrigen Temperaturen während der Aufkonzentrierung, muß man einen hohen Anteil störender flüchtiger Bestandteile in Kauf nehmen.

Einen Ausweg aus diesem Dilemma bietet die Lehre der EP-PS 0 048 154 an. Nach dieser Schrift sollen Mischungen aus Polyphenylenethern und schlagzähen Polystyrolen in einem Extruder aufgeschmolzen, vermischt und bei Temperaturen von etwa 280 °C entgast werden. Die geforderten leicht flüchtigen Anteile von weniger als 5 000 ppm können jedoch nur erreicht werden, wenn die Zersetzung der Polystyrolkomponente durch Zusatz spezieller Inhibitoren unterdrückt wird. Aber auch Anteile von 2 000 - 5 000 ppm leicht flüchtiger Komponenten in solchen Massen sind noch erheblich zu hoch, da sie bei der Herstellung von Formkörpern die Ausbildung wolkiger und schlieriger Oberflächen begünstigen ("Silberhäutchen").

Ziel der vorliegenden Erfindung ist es, ein Verfahren zur Herstellung PPE-haltiger Formmassen zu entwickeln, bei dem einerseits eine homogene Durchmischung der Komponenten gewährleistet ist und andererseits die thermische und mechanische Belastung der Polymeren und Zusatzstoffe auf ein Minimum reduziert wird. Die Formmassen sollten möglichst geringe Mengen flüchtiger Bestandteile enthalten, vorzugsweise weniger als 500 ppm, insbesondere weniger als 350 ppm. Als flüchtige Bestandteile sind nicht nur das oder die Lösemittel zu zählen, in denen das PPE gelöst war, sondern auch

- Verunreinigungen, die in den verwendeten technischen Lösemitteln in geringer Konzentration vorliegen,

- Nebenprodukte, die bei der Herstellung des PPE in kleinen Mengen anfallen, und

- oligomere Produkte bis hin zu Molmassen von 300.

Zu flüchtigen Bestandteilen im Sinne dieser Definition zählen jedoch nicht die Zusatzstoffe, die dem PPE zur Stabilisierung oder zu sonstigen Zwecken bewußt zugesetzt werden.

Es wurde jetzt ein Verfahren gefunden, das es gestattet, PPE-haltige Formmassen mit so geringen Anteilen flüchtiger Substanzen herzustellen. Die nach diesem Verfahren hergestellten Produkte weisen eine helle Farbe auf und lassen sich zu Formkörpern mit glatten, schlierenfreien Oberflächen und besonders guten mechanischen Eigenschaften verarbeiten. Das Verfahren beruht darauf, daß das PPE in einem der Vermischung vorgeschalteten Verfahrensschritt soweit entgast wird, daß der Anteil der flüchtigen Substanzen unter 500, insbesondere unter 200 ppm liegt und erst dann die Zumischung der weiteren Polymeren und Zusatzstoffe erfolgt, ohne daß sich die Notwendigkeit einer weiteren Entgasung ergibt, die zwangsläufig unter Bedingungen erfolgen müßte, bei denen diese Stoffe geschädigt würden.

Eine so weitgehende Entgasung des unvermischten hochschmelzenden PPE erschien wegen der hohen Schmelzviskosität dieses Polymeren bisher unmöglich. Dies ist jetzt erstmalig gelungen; bei den bisher bekannt gewordenen Verfahren wurde das PPE stets vor der Entgasung mit viskositätsvermindernden Polymeren wie z. B. Polystyrol versetzt.

Die PPE-Entgasung kann prinzipiell mittels der bekannten Entgasungsapparaturen im Vakuum erfolgen, insbesondere auf einer zwangsfördernden Apparatur, wie z. B. einem Entgasungsextruder mit einer oder mehreren Entgasungsöffnungen. Entscheidend ist, daß die PPE-Schmelze kurz vor und während der Entgasung Temperaturen zwischen 290 °C und 370 °C, bevorzugt 320 - 350 °C, bei einem Vakuum von 2 - 50 hPa innerhalb eines Zeitraumes von 0,1 bis 3 Minuten unterworfen wird. Durch eine Schleppmitteleinspeisung (z. B. nach H. Werner, Kunststoffe 71 (1981) 1, S. 18) kann die Entgasungsleistung verbessert werden, sie ist aber nicht zwingend notwendig. Überraschenderweise werden nicht nur leicht flüchtige Bestandteile wie z. B. Lösemittel sondern auch schwerer flüchtige, zersetzliche und vor allem intensiv dunkelgefärbte Stoffe entfernt. Das auf diese Weise behandelte PPE weist eine besonders helle Farbe und hohe thermische Beständigkeit auf.

Die anschließende Zumischung anderer Polymerer und/oder Zusatzstoffe erfolgt unter Bedingungen, die eine Schädigung dieser Substanzen weitgehend vermeiden.

Die Polymeren und/oder Zusatzstoffe werden nämlich aufgeschmolzen und lediglich auf eine leicht erhöhte Temperatur gebracht, die einerseits möglichst weit unter der Temperatur der entgasten PPE-Schmelze liegen soll, andererseits aber auch so hoch sein muß, daß eine ausreichende Fließfähigkeit für die Zuführung gegeben ist. Die für das Polymer, den Zusatzstoff oder deren Gemisch einzustellende Temperatur hängt naturgemäß von der Art des jeweils gewählten Zusatzes ab. Der Fachmann ist in der Lage, die unter den jeweiligen Bedingungen optimale Temperatur zu ermitteln. Besonders günstige Ergebnisse werden erzielt, wenn die Temperatur der zuzusetzenden Polymerschmelze so eingestellt werden kann, daß die Viskosität der PPE-Schmelze nach ihrer Entgasung und die Viskosität der Polymerschmelze gleich sind. Der Fachmann kann z. B. mit Hilfe eines Hochdruckkapillarrheometers die Viskosität der PPE-Schmelze bei der Temperatur bestimmen, die auch in der PPE-Schmelze nach der Entgasungszone herrscht, und sodann die Temperatur ermitteln, bei der die zugegebene Polymerschmelze die gleiche Viskosität wie die PPE-Schmelze aufweist. Dieses Verfahren eignet sich besonders für Mischungen aus PPE und Polystyrolharzen. Üblicherweise liegt diese Temperatur zwischen 150 und 250 °C, insbesondere zwischen 180 und 220 °C.

In einzelnen Fällen ist es sogar möglich, die Temperatur des entgasten PPE-Polymeren vor der Zumischung mit den anderen Polymeren und/oder Zusatzstoffen zu erniedrigen, so daß eine noch schonendere Durchmischung möglich wird.

Das vorliegende Verfahren nutzt den Umstand aus, daß sich Polymerschmelzen verschiedener Temperatur aber nahezu gleicher Viskosität besonders gut vermischen lassen. Aus diesem Grund wird angestrebt, daß für das Verhältnis X der Viskositäten des PPE einerseits und der Polymeren und/oder Zusatzstoffe andererseits die Beziehung $0,5 < X < 2$, vorzugsweise $0,8 < X < 1,2$, gilt.

Als Polymere kommen Homopolystyrol, kautschukmodifizierte Styrolpolymerisate, Kautschuke aller Art, Polykondensate wie z. B. Polyamide, sowie Polyolefine wie Polyethylene und Polypropylene, infrage. Das vorliegende Verfahren eignet sich vorzugsweise zur Herstellung folgender Massen:

1) Thermoplastische Massen auf Basis von Polyphenylenethern, schlagfesten Styrolpolymerisaten und pulverförmigem, füllstoffhaltigen Kautschuk sowie Verfahren zu ihrer Herstellung (vgl. deutsche Patentanmeldung P 34 24 210 vom 30.06.1984)

2) Thermoplastische Massen auf Basis von Polyphenylenethern, Styrolpolymerisaten und pulverförmigem, füllstoffhaltigen Kautschuk sowie Verfahren zu ihrer Herstellung (vgl. deutsche Patentanmeldung P 34 34 705 vom 21.09.1984)

3) Thermoplastische Massen auf Basis von Polyphenylenethern und Styrol-Butadien-Emulsionspolymerisaten (vgl. deutsche Patentanmeldung P 34 42 274 vom 20.11.1984)

4) Thermoplastische Massen auf Basis von Polyphenylenethern, Styrolpolymerisaten und Polyoctenylenen sowie Verfahren zu ihrer Herstellung (vgl. deutsche Patentanmeldung P 34 42 273 vom 20.11.1984)

5) Thermoplastische Formmassen (vgl. deutsche Patentanmeldung P 35 09 092 vom 14.03.1985)

6) Thermolastische Massen auf Basis von Polyphenylenethern und Polyoctenylenen sowie Verfahren zu ihrer Herstellung (vgl. deutsche Patentanmeldung P 35 18 277 von 22.05.1985)

7) Schlagzähe thermoplastische Formmassen auf Basis von modifizierten Polyphenylenethern, Polyoctenylenen und Polyamiden
(vgl. deutsche Patentanmeldung P 35 18 278 vom 22.05.1985)

Es ist bekannt, daß Homopolystyrol in jedem Mengenverhältnis mit PPE homogen mischbar ist. Im Falle der anderen Kunststoffe erhält man zwei- oder mehrphasige Mischungen mit jeweils speziellen Eigenschaftskombinationen. Es ist bekannt, die Vermischung solcher Polymeren mit dem PPE durch Zusatz geeigneter Hilfsmittel zu verbessern.

Als Zusatzstoffe kommen beispielsweise Ester der Phosphorsäure sowie Verbindungen infrage, die in der Lage sind, die Grenzflächenspannung zwischen den Bestandteilen der Polymerenmischung zu verringern.

Es erscheint fast selbstverständlich, daß nur Polymere mit einem niedrigen Anteil flüchtiger Beimengunggen eingesetzt werden sollten. Gegebenenfalls sollten daher die Polymeren vor ihrer Zumischung entgast werden. Gleiche Überlegungen gelten für die Zusatzstoffe, soweit sie hochmolekular sind.

Die Bestimmung des Gehaltes an flüchtigen Anteilen erfolgt mit Hilfe der Thermogravimetrie; eine etwas einfachere, abgewandelte Methode besteht darin, eine abgewogene Granulatmenge der Formmasse bei 230 °C im Vakuum 30 Minuten zu erhitzen und den Gewichtsverlust zu ermitteln. Eine dritte Möglichkeit besteht darin, in einer Lösung der Masse in Chloroform die Menge niedermolekularer Bestandteile gaschromatographisch zu bestimmen. Die beiden zuerst aufgeführten Verfahren ergeben weitgehend analoge Ergebnisse.

Den erfindungsgemäßen Formmassen können alle für solche Produkte bekannten flüssigen oder festen Hilfs- und weiteren Zusatzstoffe sowie Pigmente und Verstärkungsstoffe in bekannter Weise zugemischt werden.

Als Anhaltspunkte für die Durchführung des vorliegenden Verfahrens sollen die maximalen Temperaturen der Mischungen aus PPE und dem jeweiligen Polymeren angegeben werden, die sich nach der Vermischung einstellen. Bei Mischungen mit Polystyrolen und kautschukmodifizierten Styrolpolymerisaten und Kautschuken sollte die Temperatur 280 °C nicht übersteigen, bei Polyamiden je nach deren Schmelzpunkt 260 bis 285°C.

Das vorliegende Verfahren kommt vor allem dann in Betracht, wenn das PPE nach der oxidativen Kupplung nicht aus einem Lösemittel gefällt, sondern nach dem sogenannten "Direktisolationsverfahren" hergestellt wird.

Ein besonderer Vorteil des Verfahrens besteht darin, daß zur Durchmischung des PPE mit dem Polymeren und/oder der Zusatzstoffe nur eine außerordentlich kurze und wenig intensive Mischzone im Extruder erforderlich ist, so daß die thermische Belastung tatsächlich auf ein Minimum reduziert wird.

Die folgenden Beispiele sollen das erfindungsgemäße Verfahren erläutern. Die Prozentangaben beziehen sich jeweils auf das Gewicht der Komponenten bzw. der Mischung. Zur Überprüfung der Produkteigenschaften wurden die Formmassen bei den in der Tabelle angegebenen Zylindertemperaturen und einer Werkzeugtemperatur von 90 °C zu Formteilen verspritzt.

A) Beispiele

Eine 90 gewichtsprozentige Lösung von Poly-(2,6-dimethylphenylenether-1,4) in Toluol (RSV (reduzierte spezifische Viskosität) = 0,55 dl/g, 0,5 %ige Lösung in Chloroform, 25 °C) wird bei einer Temperatur von 240 °C in das geschlossene Gehäuse eines Zweischneckenextruders gedrückt; dabei verdampft ein großer Teil des Lösemittels durch eine rückwärtige Entgasungsöffnung des Extruders. In Produktförderrichtung liegen zwei weitere Entgasungsöffnungen, deren letzte mit einem Vakuum von 30 hPa betrieben wird. Zwischen diesen beiden Entgasungsbereichen ist eine Düse für die Einspeisung von flüssigen Schleppmitteln angebracht. Die mit einem Temperaturfühler kontrollierte Massetemperatur wird kurz vor und im Bereich der letzten Entgasungsöffnung auf 340 °C eingestellt. Diese Temperaturerhöhung wird sowohl durch eine Gehäuseheizung als auch durch eine verstärkte Knetung innerhalb dieser Zone des Kneters erreicht. Dem Fachmann ist dieses Vorgehen bekannt. Die folgenden Maschinengehäuse werden zur Kühlung der entgasten PPE-Schmelze auf 230 - 240 °C eingestellt, so daß die Schmelze bis zum Erreichen der Zone, in der das Polymere eingespeist wird, eine Massetemperatur von 300 bis 310 °C erreicht hat.

Die Zusatzpolymeren werden in einem Aufschmelzextruder aufgeschmolzen und je nach Art mit 170 - 230 °C in den Hauptextruder zur PPE-Schmelze gegeben. Entsprechend Mengenverhältnis und Ausgangstemperaturen stellt sich in der Mischung eine Temperatur von 230 bis 285 °C ein. Als Mischzone wird ein Knetblock mit drei versetzt angeordneten Knetscheiben verwendet.

Das Produkt wird als Schmelzestrang ausgetragen, gekühlt und granuliert.

Für die Vergleichsbeispiele wurde gemäß DE-OS 33 15 803 eine 85 %ige PPE-Lösung bei 190 °C mit einer Schmelze eines kautschukmodifizierten Polystyrols in einem Extruder vermischt und die Mischung anschließend über zwei Entgasungszonen der Maschine bei 270 °C entgast; bei einem der Vergleichsversuche erfolgte die Entgasung bei 350 °C.

| Beisp. Nr. | Zusammensetzung PPE[1] % | HIPS[2] % | Polyoctenylen[3] % | Sonstige % | Temperat. n.Mischen °C | flüchtige Anteile (ppm) | Zylindertemp. d. Spritzguß- maschine (°C) | Kerbschlagzähig- keit DIN 53 453 (kJ/m²) | Aussehen der Oberfläche |
|---|---|---|---|---|---|---|---|---|---|
| 1 | 90 | - | 10 | - | 285 | 300 | 290 | 18 | glatt, hell |
| 2 | 60 | 30 | 10 | - | 264 | 420 | 270 | 17 | " |
| 3 | 60 | 40 | - | - | 270 | 380 | 270 | 15 | " |
| 4 | 60 | 40 | - | - | 270 | 200[6] | 270 | 15 | " |
| 5 | 40 | 50 | - | 10 Kautschuk[4] | 250 | 320 | 270 | 17 | " |
| 6 | 55 | 25 | 10 | 10 (SB[5]) | 255 | 290 | 270 | 15 | " |
| 7 | 40 | - | 10 | 50 (Polyamid 12) | 260 | 300 | 270 | 19 | " |
| A | 60 | 40 | - | - | - | 1800 | 270 | 13 | schlierig |
| B[7] | 60 | 40 | - | - | - | 450 | 270 | 8 | glatt, dunkel |
| C | 45 | 55 | - | - | - | 950 | 270 | 12 | wolkig, rauh |

Fußnoten zur Tabelle

1) Den Polyphenylenether erhält man durch oxidative Kupplung von 2,6-Dimethylphenol, Abstoppung der Reaktion und anschließender Reaktionsextraktion gemäß DE-OSS 33 13 864 und 33 23 777. Das Lösemittel wird durch Abdampfen soweit entfernt, daß der Anteil flüchtiger Komponenten beim Eintritt in den Extruder etwa 10 % beträgt.

2) Als kautschukmodifiziertes Polystyrol (HIPS) wird VESTYRON[R] 616, ein Produkt der Firma HÜLS AG, D-4370 Marl 1, eingesetzt. Die Kenndaten dieses Produktes sind der Broschüre "Kunstoffe von Hüls, VESTYRON[R]", Ausgabe September 1979, zu entnehmen.

3) Es wird ein Polyoctenylen mit einem J-Wert von 120 ml/g und einem trans-Gehalt von 80 % eingesetzt. Ein solches Produkt ist unter dem Namen VESTENAMER[R] 8012 im Handel erhältlich (Hersteller: HÜLS AG, D-4370 Marl 1). Weitere Kenndaten dieses Produktes sind der Zeitschrift "Kautschuk, Gummi, Kunststoffe" 1981, Seiten 185 bis 190, sowie dem Hüls-Merkblatt Nr. 2247 "VESTENAMER 8012" zu entnehmen. Das Polyoctenylen kann beispielsweise auch nach K. J. Ivin "Olefin Metathesis", Academic Press, Seiten 236 ff., 1983, und den dort angegebenen weiteren Literaturstellen hergestellt werden.

4) Es handelt sich um einen pulverförmigen, rußhaltigen Kautschuk der Bezeichnung BT 7370, Produkt der Bunawerke Hüls GmbH, mit 60 % SBR-Kautschuk und 40 % Ruß. Weitere Daten sind der Produktinformation "BUNA EM-Pulverbatch" (1985) zu entnehmen.

5) Es handelt sich um eine Polymermischung aus 60 Masseteilen eines Styrol-Butadien-Copolymerisats (85 Massenteile Styrol und 15 Massenteile Butadien) und 40 Massenteilen eines E-SBR-Kautschuks (Gewichtsverhältnis Styrol/Butadien 23,5:76,5). Beide Bestandteile werden in bekannter Weise durch radikalische Emulsionspolymerisation gewonnen.

6) Bei diesem Versuch wurden, bezogen auf PPE, 5 % Wasser als Schleppmittel zugesetzt.

7) Bei Vergleichsbeispiel B wurde die Entgasungstemperatur versuchsweise auf 350 °C erhöht.

8) Als Polyamid 12 wurde der Typ VESTAMID[R] L 1900 der Firma Hüls AG, D-4370 Marl, eingesetzt. Die Kenndaten dieses Produkts sind der VESTAMID-Broschüre (September 1983) zu entnehmen.

## Patentansprüche

1. Verfahren zur Herstellung von PPE-haltigen Formmassen durch Schmelzmischen der Komponenten, dadurch gekennzeichnet, daß man
a) eine PPE-Schmelze, die noch mindestens 0,1 % flüchtige Bestandteile enthält, bis auf einen Restgehalt an flüchtigen Bestandteilen von weniger als 500 ppm entgast, wobei sie kurz vor und während der Entgasung Temperaturen zwischen 290 °C und 370 °C bei einem Vakuum von 2 - 50 hPa innerhalb eines Zeitraumes von 0,1 bis 3 Minuten unterworfen wird, und
b) zu der erhaltenen PPE-Schmelze die aufgeschmolzenen weiteren Polymeren und gegebenenfalls die Zusatzstoffe bei einer Temperatur nicht höher als 285 °C hinzufügt und vermischt.

2. Verfahren nach Anspruch 1, dadurch gekennzeichnet, daß man die Entgasung, Zugabe und Vermischung in einer Zwangsfördermaschine vornimmt.

3. Verfahren nach Anspruch 2, bei dem als Zwangsfördermaschine ein Doppelschneckenkneter verwendet wird.

4. Verfahren nach den Ansprüchen 1 bis 3, dadurch gekennzeichnet, daß man durch geeignete Auswahl des PPE einerseits, der weiteren Komponenten und/oder Zusatzstoffe andererseits (sowie durch Einstellung der Temperaturen der PPE-Schmelze und der Schmelze der weiteren Komponenten und gegebenenfalls der Zusatzstoffe) ein solches Verhältnis der Viskositäten X von PPE zu weiteren Komponenten und/oder Zusatzstoffen einstellt, daß die Beziehung gilt:
$0,5 < X < 2$.

5. Verfahren nach Anspruch 4, dadurch gekennzeichnet, daß die Beziehung gilt:
$0,8 < X < 1,2$.

6. Verfahren nach den Ansprüchen 1 bis 5, dadurch gekennzeichnet, daß die Entgasung des PPE bei Verweilzeiten von 0,1 bis 3 Minuten im Temperaturbereich von 320 bis 350 °C vorgenommen wird.

7. Verfahren nach den Ansprüchen 1 bis 6, dadurch gekennzeichnet, daß der Gehalt an flüchtigen Bestandteilen in den eingesetzten weiteren Polymeren und/oder Zusatzstoffen unter 200 ppm liegt.

8. Verfahren nach den Ansprüchen 1 bis 7, dadurch gekennzeichnet, daß die Temperatur in der Mischzone 260°C nicht überschreitet.

## Claims

1. A process for the preparation of a PPE-containing moulding composition by mixing the melts of the components, characterized in that
a) a PPE melt which still contains at least 0.1% of volatile constituents is degassed to a residual level of volatile constituents of less than 500 ppm, it being subjected, just before and during the degassing, to temperatures between 290°C and 370°C in a vacuum of 2 - 50 hPa within a period of from 0.1 to 3 minutes, and

b) the molten further polymers and, if desired, the additives are added to the resultant PPE melt at a temperature of not greater than 285°C, and the components are mixed.

2. A process according to claim 1, characterized in that the degassing, addition and mixing are carried out in a forced-feed machine.

3. A process according to claim 2, in which, as the forced-feed machine, a twin-screw kneader is used.

4. A process according to any of claims 1 to 3, characterized in that, by suitable choice of the PPE on the one hand, and of the further components and/or additives on the other hand (and by adjusting the temperatures of the PPE melt and the melt of the further components and, where appropriate, the additives), a ratio of the viscosities X of PPE to further components and/or additives is set such that the relation $0.5 < X < 2$ is true.

5. A process according to claim 4, characterized in that the relation $0.8 < X < 1.2$ is true.

6. A process according to any of claims 1 to 5, characterized in that the degassing of the PPE is carried out at residence times of from 0.1 to 3 minutes in the temperature range from 320 to 350°C.

7. A process according to any of claims 1 to 6, characterized in that the level of volatile constituents in the further polymers and/or additives employed is less than 200 ppm.

8. A process according to any of claims 1 to 7, characterized in that the temperature in the mixing zone does not exceed 260°C.

**Revendications**

1. Procédé pour la préparation de masses à mouler renfermant un éther polyphénylénique, par mélange des composants à 1 'état fondu, caractérisé par le fait :

a) que l'on dégaze une masse fondue d'éther polyphénylénique renfermant encore au moins 0,1 % de constituants volatils, jusqu'à une teneur résiduelle en constituants volatils inférieure à 500 ppm, en la soumettant brièvement, avant et pendant le dégazage, à des températures comprises entre 290°C et 370°C, sous un vide de 2 à 50 hPa, dans un intervalle de temps de 6 secondes à 3 minutes, et

b) qu'à la masse fondue d'éther polyphénylénique que l'on obtient, on ajoute les autres polymères fondus et éventuellement les additifs, à une température ne dépassant pas 285°C, et que l'on mélange le tout.

2. Procédé selon la revendication 1, caractérisé par le fait que l'on effectue le dégazage, l'addition et le mélange dans une machine à extraction forcée.

3. Procédé selon la revendication 2, caractérisé par le fait que l'on utilise, comme machine à extraction forcée, un pétrin à double vis sans fin.

4. Procédé selon les revendications 1 à 3, caractérisé par le fait que par un choix approprié de l'éther polyphénylénique, d'une part, des autres composants et/ou additifs, d'autre part (ainsi que par, l'ajustement des températures de la masse fondue d'éther polyphénylénique et de la masse fondue des autres composants et éventuellement des additifs), on établit, entre la viscosité de l'éther polyphénylénique et celles des autres composants et/ou additifs, un rapport tel que l'on ait la relation :
$0,5 < X < 2$.

5. Procédé selon la revendication 4, caractérisé par le fait que la relation prise en considération est :
$0,8 < X < 1,2$.

6. Procédé selon la revendication 1 à 5, caractérisé par le fait que le dégazage de l'éther polyphénylénique est effectué pour des temps de séjour de 6 secondes à 3 minutes, dans un domaine de température de 320 à 350°C.

7. Procédé selon les revendications 1 à 6, caractérisé par le fait que la teneur en constituants volatils dans les autres polymères et/ou additifs utilisés est inférieure à 200 ppm.

8. Procédé selon les revendications 1 à 7, caractérisé par le fait que la température dans la zone de mélange ne dépasse pas 260°C.